# EUROPEAN PATENT APPLICATION

(11) **EP 4 843 857 A1**
(43) Date of publication of application: **25.11.2026**
(21) Application number: 25766859.0
(22) Date of filing: 01.04.2025
(51) Int. Cl.: B60W 30/19, F16H 61/02

(54) **VEHICLE CONTROL METHOD AND APPARATUS, DEVICE, AND STORAGE MEDIUM**

(30) Priority: 31.07.2024 CN 202411043590
(71) Applicant: Chery Automobile Co., Ltd., Wuhu, Anhui 241006 (CN)
(72) Inventor: WU, Shanshan, Wuhu, Anhui 241006 (CN); JIANG, Feng, Wuhu, Anhui 241006 (CN); SUN, Jianwei, Wuhu, Anhui 241006 (CN)
(74) Representative: Yang, Shu
(86) International application number: PCT/CN2025/086640
(87) International publication number: WO 2026/025993

(57) **Abstract**

The present disclosure relates to the field of vehicle technologies. Disclosed are a method and apparatus for controlling a vehicle, a device, and a storage medium. The method includes: verifying validity of a method for determining a slope (310) based on a change in a slope at a vehicle's position determined within a first duration; determining a slope at the vehicle's current position based on longitudinal acceleration of the vehicle in the case that the validity verification succeeds (320); determining required torque of the vehicle based on the slope at the vehicle's current position and a speed of the vehicle (330); and controlling a gear of the vehicle based on the required torque of the vehicle (340). According to the above method, the gear of the vehicle is controlled more reasonably based on the slope at the vehicle's position in the case that the vehicle is in a ramp condition.

## Description

The present disclosure claims priority to Chinese Patent Application No. 202411043590.6, filed on July 31, 2024 and entitled "METHOD AND APPARATUS FOR CONTROLLING VEHICLE, DEVICE, AND STORAGE MEDIUM", the content of which is incorporated herein by reference in its entirety.

### TECHNICAL FIELD

Embodiments of the present disclosure relate to the field of vehicle technologies, and in particular, to a method and apparatus for controlling a vehicle, a device, and a storage medium.

### BACKGROUND

Automatic transmission has been widely used in vehicles because of its outstanding advantages, such as eliminating the difference of driver's gear shifting skill, effectively improving the power performance and economy of vehicles, reducing driver's fatigue and improving driving safety.

However, in the current automatic transmission, only the vehicle speed and the throttle opening are used as control parameters for gear shift, and it is difficult to achieve a reasonable control of the vehicle gear in a ramp condition.

### SUMMARY

Embodiments of the present disclosure provide a method and apparatus for controlling a vehicle, a device, and a storage medium. The technical solutions provided according to the embodiments of the present disclosure are as follows:

According to some embodiments of the present disclosure, a method for controlling a vehicle is provided. The method is applicable to an electronic device. The method includes:
verifying validity of a method for determining a slope based on a change in a slope at a vehicle's position determined within a first duration;
determining a slope at the vehicle's current position based on longitudinal acceleration of the vehicle in a case that the validity verification succeeds;
determining required torque of the vehicle based on the slope at the vehicle's current position and a speed of the vehicle; and
controlling a gear of the vehicle based on the required torque of the vehicle.

According to some embodiments of the present disclosure, an apparatus for controlling a vehicle is provided. The apparatus includes:
a validity verification module, configured to verify validity of a method for determining a slope based on a change in a slope at a vehicle's position determined within a first duration;
a slope determination module, configured to determine a slope at a vehicle's current position based on longitudinal acceleration of the vehicle in a case that the validity verification succeeds; and
a gear control module, configured to determine required torque of the vehicle based on the slope at the vehicle's current position and a speed of the vehicle, wherein
the gear control module is further configured to control a gear of the vehicle based on the required torque of the vehicle.

According to some embodiments of the present disclosure, an electronic device is provided. The electronic device includes a processor and a memory storing computer programs. The computer programs, when loaded and run by the processor, cause the processor to perform the method for controlling a vehicle described above.

According to some embodiments of the present disclosure, a computer-readable storage medium is provided. The computer-readable storage medium stores computer programs. The computer programs, when loaded and run by a processor, cause the processor to perform the method for controlling a vehicle described above.

According to some embodiments of the present disclosure, a computer program product is provided. The computer program product includes computer programs stored in a computer-readable storage medium. The computer programs, when read from the computer-readable storage medium, and loaded and run by a processor, cause the processor to perform the method for controlling a vehicle described above.

The technical solutions provided according to the embodiments of the present disclosure include at least the following beneficial effects.

After the slope at the vehicle's current position is determined based on the longitudinal acceleration of the vehicle, the required torque of the vehicle is determined based on the slope and the speed of the vehicle, and the gear of the vehicle is controlled based on the required torque. In this way, the gear of the vehicle is controlled more reasonably based on the slope at the vehicle's position in the case that the vehicle is in a ramp condition. In addition, before determining the slope at the vehicle's current position by applying the above method, the validity of the method for determining the slope is verified based on the change in the slope at the vehicle's position determined within a specific duration (i.e., the first duration), so as to ensure the accuracy of the finally determined slope at the vehicle's current position, thereby ensuring the reasonable control over the gear of the vehicle.

### BRIEF DESCRIPTION OF DRAWINGS

FIG. 1 is a schematic diagram of a solution implementation environment according to some embodiments of the present disclosure;
FIG. 2 is a schematic diagram of control logic of a vehicle control unit (VCU) for controlling a vehicle according to some embodiments of the present disclosure;
FIG. 3 is a flowchart of a method for controlling a vehicle according to some embodiments of the present disclosure;
FIG. 4 is a schematic diagram of a principle of slope calculation according to some embodiments of the present disclosure;
FIG. 5 is a block diagram of an apparatus for controlling a vehicle according to some embodiments of the present disclosure; and
FIG. 6 is a structural block diagram of an electronic device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

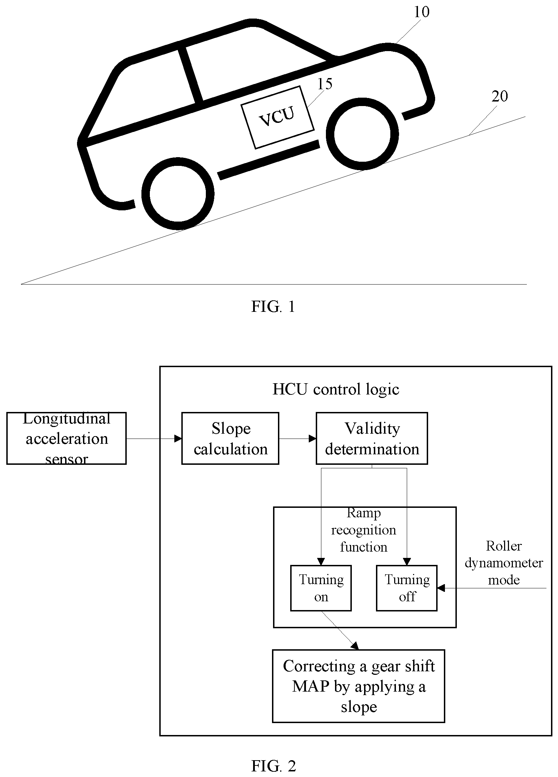

Referring to FIG. 1, it illustrates a schematic diagram of a solution implementation environment according to some embodiments of the present disclosure.

In the solution implementation environment, a vehicle 10 is located on a ramp 20, and a VCU 15 in the vehicle 10 is configured to control the vehicle 10. For example, the VCU 15 is configured to control gear shift and charging power in the case that the vehicle 10 is traveling.

The vehicle 10 may be a fuel vehicle, a hybrid electric vehicle (HEV), or a battery electric vehicle (BEV).

In some embodiments, the vehicle 10 is an HEV, that is, the vehicle 10 is driven by both a fuel engine and a motor. The HEV may include a plug-in hybrid electric vehicle (PHEV), a series hybrid electric vehicle (SHEV), a series-parallel hybrid electric vehicle, or the like. The VCU 15 may be a hybrid control unit (HCU).

In the embodiments of the present disclosure, the VCU 15 can recognize a slope at which the vehicle 10 is located, and controls the vehicle 10 based on the slope. This is specifically described in the following embodiments.

Please refer to FIG. 2, which illustrates a schematic diagram of control logic of a VCU for controlling a vehicle according to some embodiments of the present disclosure.

The VCU calculates a slope at a vehicle's position based on the longitudinal acceleration measured by a longitudinal acceleration sensor in the vehicle, and the VCU determines the validity of the slope calculation. In the case that the slope calculation is reasonable, a slope recognition function of the vehicle is turned on, and the recognized slope at the vehicle's position is applied to correct a gear shift MAP. The gear shift MAP is data used to describe the correspondence relationship between the speed of the vehicle and required torque. After the required torque of the vehicle is queried from the corrected gear shift MAP based on the speed of the vehicle, the gear of the vehicle can be controlled to a gear corresponding to the required torque. In the case that the slope calculation is unreasonable, or the vehicle is in a roller dynamometer mode (that is, the mode in which only hubs rotate while the vehicle body remains stationary), the slope recognition function of the vehicle is turned off, and the slope at the vehicle's position is not applied to correct the gear shift MAP.

By adopting the above control logic, in a ramp condition, the gear of the vehicle can be controlled based on the slope at the vehicle's position in the case that the vehicle is traveling, thereby improving the drivability of the vehicle. Hereinafter, the above control logic is described in detail through specific embodiments.

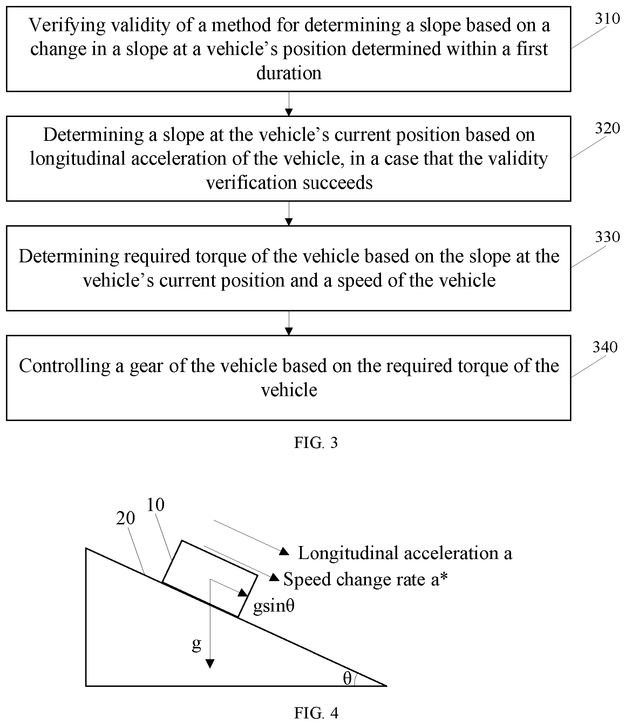

Please refer to FIG. 3 which illustrates a flowchart of a method for controlling a vehicle according to some embodiments of the present disclosure. An electronic device is an executive body of steps of the method . For example, the electronic device is the VCU 15 in the vehicle 10. The method includes at least one of the following steps 310 to 340.

In step 310, validity of a method for determining a slope is verified, based on a change in a slope at a vehicle's position determined within a first duration.

The slope is the ratio of the vertical height to the horizontal length of the ramp, and is typically expressed as a percentage.

The first duration is set by a technician as required, for example, 1 s, 3 s, or 10 s, which is not limited in the present disclosure.

The slope at the vehicle's position determined within the first duration is determined by using the method for determining a slope. For the specific content of the method for determining a slope, reference is made to the following step 320, which is not repeated herein.

In some embodiments, the slope at the vehicle's position is determined at at least two time points in the first duration (for example, the start time point and the end time point of the first duration). The change in the slope corresponding to each of the at least two time points can reflect the change in the slope at the vehicle's position determined within the first duration.

In some embodiments, the slope at the vehicle's position is determined based on a first time interval within the first duration, to obtain the slope corresponding to each of the at least two time points. The first time interval is set by a technician as required, for example, 0.2 s, 0.5 s, or 1 s, which is not limited in the present disclosure.

In some embodiments, conditions that the validity verification succeeds include at least one of: the slope (for example, the slope corresponding to each of the at least two time points) at the vehicle's position determined within the first duration does not exceed a set slope range, or a change rate of the slope at the vehicle's position determined within the first duration is less than a set change rate.

The set slope range is set by a technician as required, for example, 2% to 40%, or 3% to 50%, which is not limited in the present disclosure.

In some embodiments, the change rate is calculated based on the slopes at the vehicle's position determined at the start time point and the end time point of the first duration, respectively. For example, the difference between the slope at the vehicle's position determined at the end time point and the slope at the vehicle's position determined at the start time point is divided by the slope at the vehicle's position determined at the start time point to obtain the change rate.

In some embodiments, the change rate is calculated based on the maximum slope and the minimum slope in slopes (for example, slopes corresponding to the at least two time points) at the vehicle's position determined within the first duration. For example, the difference between the maximum slope and the minimum slope is divided by the minimum slope to obtain the change rate.

In some embodiments, the conditions that the validity verification succeeds further include at least one of: the speed of the vehicle does not exceed a set speed range within the first duration, or the steering angle of the steering wheel of the vehicle does not exceed a set angle range within the first duration.

Both the set speed range and the set angle range are set by a technician as required, which is not limited in the present disclosure.

In step 320, a slope at the vehicle's current position is determined based on the longitudinal acceleration of the vehicle, in the case that the validity verification succeeds.

The longitudinal acceleration of the vehicle refers to the acceleration along a longitudinal axis of the vehicle.

In some embodiments, the longitudinal acceleration is acquired by a longitudinal acceleration sensor in the vehicle. The longitudinal acceleration sensor can measure the longitudinal acceleration of the vehicle in real time, and convert the measured longitudinal acceleration into the form of an electric signal.

The current slope of the vehicle refers to the slope at the vehicle's position at the current moment, and the current moment refers to the moment in the case that "the slope at the vehicle's current position being determined based on the longitudinal acceleration of the vehicle" starts to be executed.

In some embodiments, step 320 includes at least one of the following steps 322 to 326.

In step 322, a difference between the longitudinal acceleration and the speed change rate of the vehicle is divided by gravitational acceleration to obtain a first slope.

In some embodiments, in the case that the validity verification succeeds, the difference between the longitudinal acceleration and the speed change rate of the vehicle is divided by the gravitational acceleration to obtain the first slope.

In step 324, the first slope is determined as the slope at the vehicle's current position in the case that the first slope is less than or equal to a first threshold.

Please refer to FIG. 4 which illustrates a schematic diagram of a principle of slope calculation according to some embodiments of the present disclosure.

The vehicle 10 travels on a ramp 20 with an angle θ, and the first slope is =(a-a*)/g= gsinθ/g=sinθ, where g is gravitational acceleration, a is longitudinal acceleration, and a* is a speed change rate. In the case that the vehicle is stationary or travels at a constant speed, a* = 0, and the first slope = a/g.

Since sin θ approximates tan θ in the case that the angle θ is smaller, it may be considered that the slope at the vehicle's current position is equal to the first slope.

That is, the slope at the vehicle's current position is i=tanθ≈sinθ=gsinθ/g=(a-a*)/g.

The speed change rate may be calculated by the following formula: a* = (V2 - V1)/△t, where V1 is the speed of the vehicle at a first moment, V2 is the speed of the vehicle at a second moment, the second moment may be the current moment, △t is a set interval between the first moment and the second moment, and △t is set by a technician as required, for example, 0.3 s, 0.5 s, or 0.7 s.

In the road design specification, a common driving road slope should not be greater than 8%. In this case, θ ≤ 5°, that is, in the case that 0° ≤ θ ≤ 5°, it is considered that sin θ = tan θ, so the first threshold may be set to 8%. The first threshold may alternatively be set to another value by a technician as required, which is not limited in the present disclosure.

In step 326, in the case that the first slope is greater than the first threshold, the slope at the vehicle's current position is determined based on the longitudinal acceleration, the speed, and the throttle opening of the vehicle.

In the case that the first slope is greater than the first threshold, it is considered that the angle θ of the ramp is larger, and it cannot be considered that sin θ is equal to tan θ.

In some embodiments, since the speed, the throttle opening, and the longitudinal acceleration of the vehicle have different correspondence relationships in different slopes, a relationship table of the speed, the throttle opening, the longitudinal acceleration and the slope is established based on experiments (the relationship table is used to record the correspondence relationships between the four). The slope at the vehicle's current position is queried from the table based on the longitudinal acceleration, the speed, and the throttle opening of the vehicle. In addition, in the solution, the method is applied only in the case of a larger slope (where the first slope is greater than the first threshold). Therefore, only the relationship table of the speed, the throttle opening, the longitudinal acceleration and the slope needs to be pre-calibrated in the case of a larger slope.

In some embodiments, an uphill condition and a downhill condition of the vehicle correspond to different relationship tables. In the case that the vehicle is in the uphill condition, the slope at the vehicle's current position is queried from a relationship table corresponding to the uphill condition, and in the case that the vehicle is in the downhill condition, the slope at the vehicle's current position is queried from a relationship table corresponding to the downhill condition.

Step 320 and steps included in step 320 described above may be all used as the method for determining a slope in the above embodiments, which is not repeated in the present disclosure.

In the above embodiments, in the case of a smaller slope and a larger slope, the slope is recognized by two different slope recognition methods. According to one method, in the case of a smaller slope, the slope is quickly calculated by using the characteristic that sin θ approximates tan θ. According to the other method, in the case of a larger slope, the slope is more accurately acquired based on the longitudinal acceleration, the speed, and the throttle opening of the vehicle. As a result, the solution is widely applied to various ramp conditions. In step 330, the required torque of the vehicle is determined based on the slope at the vehicle's current position and the speed of the vehicle.

Torque is a kind of moment that causes an object to rotate.

The required torque is the torque required by the vehicle to maintain a certain state. In some embodiments, the required torque of the vehicle is the torque required by the vehicle to maintain the current state (to maintain traveling at the current speed in the case of the current slope).

The required torque may be provided by a fuel engine of the vehicle, or may be provided by a motor of the vehicle, or may be provided by both the fuel engine and the motor.

In some embodiments, step 330 includes: the required torque of the vehicle is determined based on the slope at the vehicle's current position and the speed of the vehicle, in the case that the vehicle is not in a roller dynamometer mode and the slope at the vehicle's current position is greater than a second threshold. In the roller dynamometer mode, the vehicle only moves the hubs while the vehicle body is stationary.

The roller dynamometer mode of the vehicle is mostly used for performance testing of the vehicle. In the roller dynamometer mode, there is no need to recognize a slope to control a gear.

The second threshold is a threshold used to determine whether the vehicle is in a ramp condition, and is set by a technician as required, for example, 1%, 2%, or 3%, which is not limited in the present disclosure.

In the above embodiments, it is defined that the required torque of the vehicle is determined in combination with the slope only in the case that the vehicle is not in the roller dynamometer mode and is in the ramp condition, which ensures the safety and reliability of the application of the solution, and avoids invalid calculation.

In some embodiments, step 330 includes at least one of the following steps 332 to 336.

In step 332, a correction coefficient is acquired based on the slope at the vehicle's current position.

In some embodiments, the technician pre-calibrates coefficient data, and the coefficient data is used to describe the correspondence relationship between the slope and the correction coefficient. For example, the coefficient data is in the form of a calibratable table, and different slopes in the table are in one-to-one correspondence with different correction coefficients. Based on the slope at the vehicle's current position, the correction coefficient corresponding to the slope at the vehicle's current position can be queried from the table.

In step 334, set data is corrected by applying the correction coefficient to obtain corrected set data. The set data is used to describe the correspondence relationship between the speed of the vehicle and the required torque.

The initial set data is pre-configured by a technician, and includes the set data applied in an uphill condition and the set data applied in a downhill condition.

In some embodiments, the set data includes a plurality of speed-required torque pairs, and the speed and the required torque in each speed-required torque pair correspond to each other. In some embodiments, values of all speeds in the plurality of speed-required torque pairs are multiplied by a set coefficient to obtain corrected set data. In some embodiments, values of all required torques in the plurality of speed-required torque pairs are multiplied by a set coefficient to obtain corrected set data.

In some embodiments, the set data is in the form of a curve, and a horizontal coordinate of the curve is the required torque and a vertical coordinate is the speed. Alternatively, a horizontal coordinate of the curve is the speed and a vertical coordinate is the required torque. In some embodiments, values of the horizontal coordinate of the curve are multiplied by a set coefficient to obtain the corrected set data. In some embodiments, values of the vertical coordinate of the curve are multiplied by a set coefficient to obtain the corrected set data.

In the embodiments of the present disclosure, the set data corrected by the correction coefficient may be the value of the speed in the set data, or the value of the required torque in the set data, which is not limited in the present disclosure.

In step 336, the required torque of the vehicle is acquired from the corrected set data based on the speed of the vehicle.

The uphill condition and the downhill condition of the vehicle correspond to different set data. In the case that the vehicle is in the uphill condition, the set data corresponding to the uphill condition is corrected, and the required torque of the vehicle is acquired from the set data. In the case that the vehicle is in the downhill condition, the set data corresponding to the downhill condition is corrected, and the required torque of the vehicle is acquired from the set data.

In the above embodiments, the slope is not directly used to determine the required torque, but is used to acquire the correction coefficient. The correction coefficient is used to correct the set data (the set data is used to describe the correspondence relationship between the speed of the vehicle and the required torque), such that the corrected set data is suitable for use at the current slope. The existing set data is fully utilized, and the implementation cost of the solution is reduced.

In step 340, the gear of the vehicle is controlled based on the required torque of the vehicle.

In some embodiments, the technician pre-configures the required torque range corresponding to each gear of the vehicle (that is, for a required torque range, the vehicle is applicable to a gear corresponding to the range). That is, a gear applicable to the vehicle may be directly determined based on the required torque of the vehicle.

In some embodiments, a gear corresponding to the required torque of the vehicle is the current gear of the vehicle, that is, the gear of the vehicle does not need to be shifted.

In some embodiments, a gear corresponding to the required torque of the vehicle is not the current gear of the vehicle, and the vehicle is shifted from the current gear to the gear corresponding to the required torque of the vehicle.

In some embodiments, the gear of the vehicle is controlled by an automatic transmission in the vehicle.

In some embodiments, the automatic transmission is a dedicated hybrid transmission (DHT).

According to the technical solutions provided in the embodiments of the present disclosure, after the slope at the vehicle's current position is determined based on the longitudinal acceleration of the vehicle, the required torque of the vehicle is determined based on the slope and the speed of the vehicle, and the gear of the vehicle is controlled based on the required torque. It realizes that the gear of the vehicle is controlled more reasonably based on the slope at the vehicle's position, in the case that the vehicle is in a ramp condition. In addition, before the slope at the vehicle's current position is determined by using the above method, the validity of the method for determining the slope is verified based on the change in the slope at the vehicle's position determined within a specific duration (i.e., the first duration), so as to ensure the accuracy of the finally determined slope at the vehicle's current position, thereby ensuring the reasonable control over the gear of the vehicle.

In some embodiments, the method for controlling a vehicle further includes:
1. The charging power required by the vehicle is determined based on the slope at the vehicle's current position and a state of charge (SOC) of the vehicle.
   In some embodiments, the charging power required by the vehicle is queried from a slope and charging power requirement table based on the slope at the vehicle's current position and the SOC of the vehicle. The slope and charging power requirement table is pre-calibrated by a technician, and is used to record the correspondence relationship between the slope, the SOC, and the charging power required by the vehicle.
2. The charging of the vehicle is controlled based on the charging power required by the vehicle.

In some embodiments, the vehicle is provided with a first motor with a charging function. The first motor may be a motor dedicated to generating electric energy to charge a battery in the vehicle, and the first motor may feature functions of providing power for (providing torque to drive the vehicle) and charging the vehicle.

In some embodiments, an engine (fuel engine) in the vehicle is controlled to drive the first motor to generate electric energy and charge the battery in the vehicle based on the charging power required by the vehicle.

According to the technical solutions provided in the above embodiments, in a ramp condition, the charging power is determined for the vehicle based on the actual slope, and the relationship between the power consumption of the vehicle and the slope is considered (for example, the charging power will be increased in an uphill condition with a higher slope), which is helpful to ensure the electrical balance of the vehicle.

In some embodiments, in the case that the slope at the vehicle's current position is greater than a third threshold, the motor of the vehicle is requested to provide torque in response to a brake pedal being released.

The third threshold is similar to the second threshold, and is also a threshold used to determine whether the vehicle is in a ramp condition. The third threshold and the second threshold may be the same or different.

According to the technical solutions provided in the above embodiments, it can be ensured that a driver releases the brake pedal after the ramp condition is recognized, and motor torque is requested to intervene in time after an electrical park brake (EPB) in the vehicle no longer provides brake torque, thereby preventing the vehicle from rolling back in the case of starting on a ramp and ensuring driving safety.

The following are the apparatus embodiments of the present disclosure that may be configured to implement the method embodiments of the present disclosure. For details that are not disclosed in the apparatus embodiments of the present disclosure, reference is made to the method embodiments of the present disclosure.

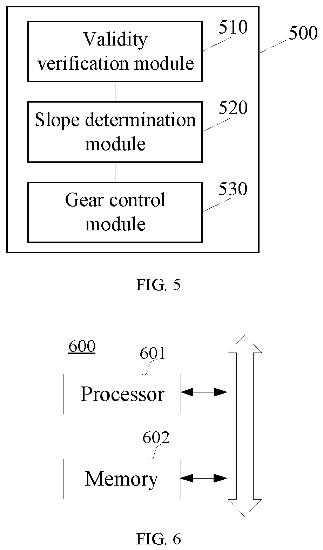

Please refer to FIG. 5 which illustrates a block diagram of an apparatus for controlling a vehicle according to some embodiments of the present disclosure. The apparatus for controlling a vehicle has a function of realizing the method for controlling a vehicle described above, and the function may be realized by hardware or software executed by hardware . The apparatus for controlling a vehicle may be an electronic device or may be set up in an electronic device. The apparatus 500 may include: a validity verification module 510, a slope determination module 520, and a gear control module 530.

The validity verification module 510 is configured to verify validity of a method for determining a slope, based on a change in a slope at a vehicle's position determined within a first duration.

The slope determination module 520 is configured to determine a slope at the vehicle's current position based on longitudinal acceleration of the vehicle in the case that the validity verification succeeds.

The gear control module 530 is configured to determine required torque of the vehicle based on the slope at the vehicle's current position and the speed of the vehicle.

The gear control module 530 is further configured to control a gear of the vehicle based on the required torque of the vehicle.

In some embodiments, the slope determination module 520 is configured to: divide a difference between the longitudinal acceleration and the speed change rate of the vehicle by gravitational acceleration to obtain a first slope, determine the first slope as the slope at the vehicle's current position in the case that the first slope is less than or equal to a first threshold, and determine the slope at the vehicle's current position based on the longitudinal acceleration, the speed, and the throttle opening of the vehicle, in the case that the first slope is greater than the first threshold.

In some embodiments, the gear control module 530 is configured to: acquire a correction coefficient based on the slope at the vehicle's current position, correct set data by applying a correction coefficient to obtain corrected set data, where the set data is used to describe the correspondence relationship between the speed and the required torque of the vehicle, and acquire the required torque of the vehicle from the corrected set data based on the speed of the vehicle, where an uphill condition and a downhill condition of the vehicle correspond to different set data.

In some embodiments, the apparatus 500 further includes: a charging control module (not illustrated in FIG. 5).

The charging control module is configured to: determine charging power required by the vehicle based on the slope at the vehicle's current position and the SOC of the vehicle, and control the charging of the vehicle based on the charging power required by the vehicle.

In some embodiments, the gear control module 530 is configured to determine the required torque of the vehicle based on the slope at the vehicle's current position and the speed of the vehicle in the case that the vehicle is not in a roller dynamometer mode and the slope at the vehicle's current position is greater than a second threshold, where in the roller dynamometer mode, the vehicle only moves hubs while the vehicle body is stationary.

In some embodiments, the apparatus 500 further includes: a torque request module (not illustrated in FIG. 5).

The torque request module is configured to request a motor of the vehicle to provide torque in response to a brake pedal being released in the case that the slope at the vehicle's current position is greater than a third threshold.

According to the technical solutions provided in the embodiments of the present disclosure, after the slope at the vehicle's current position is determined based on the longitudinal acceleration of the vehicle, the required torque of the vehicle is determined based on the slope and the speed of the vehicle, and the gear of the vehicle is controlled based on the required torque. In this way, the gear of the vehicle is controlled more reasonably based on the slope at the vehicle's position in the case that the vehicle is in a ramp condition. In addition, before determining the slope at the vehicle's current position by applying the above method, the validity of the method for determining the slope is verified based on the change in the slope at the vehicle's position determined within a specific duration (i.e., the first duration), so as to ensure the accuracy of the finally determined slope at the vehicle's current position, thereby ensuring the reasonable control over the gear of the vehicle.

It should be noted that in the case that the apparatus according to the above embodiments implements the functions thereof, the division of the functional modules is merely exemplary. In practical applications, the above functions can be assigned to different functional modules as needed, that is, the internal structure of the device may be divided into different functional modules, so as to implement all or a part of the above functions. In addition, the apparatus and the method according to the above embodiments belong to the same concept, and specific implementation processes thereof are described in the method embodiments in detail, and are not repeated herein.

Please refer to FIG. 6, which exemplarily illustrates a structural block diagram of an electronic device according to some embodiments of the present disclosure.

Generally, the electronic device 600 includes: a processor 601 and a memory 602. The electronic device 600 may be implemented as a VCU in a vehicle.

The processor 601 includes one or more processing cores, such as a 4-core processor and an 8-core processor. The processor 601 is implemented in at least one hardware form of a digital signal processor (DSP), a field programmable gate array (FPGA), or a programmable logic array (PLA). The processor 601 further includes a main processor and a coprocessor. The main processor is a processor configured to process data in an awake state, and is also referred to as a central processing unit (CPU). The coprocessor is a low-power processor configured to process data in a standby state. In some embodiments, the processor 601 is integrated with a graphics processing unit (GPU) that is responsible for rendering and drawing contents that need to be displayed on a display screen. In some embodiments, the processor 601 further includes an artificial intelligence (AI) processor for processing computing operations related to machine learning.

The memory 602 may include one or more computer-readable storage media, which may be tangible and non-transitory. The memory 602 further includes a high-speed random access memory, and a non-volatile memory, such as one or more magnetic disk storage devices and flash storage devices. In some embodiments, the non-transitory computer-readable storage medium in the memory 602 stores one or more computer programs. The one or more computer programs, when loaded and run by the processor 601, cause the processor to perform the method for controlling a vehicle described above.

Those skilled in the art should understand that the structure illustrated in FIG. 6 does not limit the electronic device 600, and the electronic device may include more or fewer components than those illustrated, or some of the components may be combined, or a different arrangement of components may be employed.

In some embodiments, a computer-readable storage medium is further provided. The storage medium stores one or more computer programs. The one or more computer programs, when loaded and run by a processor, cause the processor to perform the method for controlling a vehicle described above.

In some embodiments, the computer-readable storage medium includes: a read-only memory (ROM), a random-access memory (RAM), a solid state drive (SSD), an optical disk, or the like. The RAM includes a resistance random-access memory (ReRAM) and a dynamic random-access memory (DRAM).

In some embodiments, a computer program product is further provided. The computer program product includes one or more computer programs stored in a computer-readable storage medium. The one or more computer programs, when read from the computer-readable storage medium, and loaded and run by a processor, cause the processor to perform the method for controlling a vehicle described above.

It should be understood that the term "a plurality of" herein means two or more. The term "and/or" describes the association relationship between the associated objects and indicates that three relationships may be present. For example, A and/or B may indicate that: only A is present, both A and B are present, and only B is present. The symbol "/" generally indicates an "or" relationship between the associated objects. In addition, serial numbers of the steps described herein only show an exemplary possible execution sequence among the steps, and in some other embodiments, the steps may also be executed out of the numbering sequence, for example, two steps with different serial numbers are executed simultaneously, or two steps with different serial numbers are executed in a reverse order to the illustrated sequence, which is not limited in the present disclosure.

Described above are merely exemplary embodiments of the present disclosure and are not intended to limit the present disclosure. Any modifications, equivalents, improvements, and the like, made within the spirit and principle of the present disclosure should fall within the protection scope of the present disclosure.

## Claims

1. A method for controlling a vehicle, applicable to an electronic device, comprising:
verifying validity of a method for determining a slope based on a change in a slope at a vehicle's position determined within a first duration;
determining a slope at the vehicle's current position based on longitudinal acceleration of the vehicle in a case that the validity verification succeeds;
determining required torque of the vehicle based on the slope at the vehicle's current position and a speed of the vehicle; and
controlling a gear of the vehicle based on the required torque of the vehicle.

2. The method according to claim 1, wherein determining the slope at the vehicle's current position based on the longitudinal acceleration of the vehicle, comprises:
dividing a difference between the longitudinal acceleration and a speed change rate of the vehicle by gravitational acceleration to obtain a first slope;
determining the first slope as the slope at the vehicle's current position in a case that the first slope is less than or equal to a first threshold; and
determining the slope at the vehicle's current position based on the longitudinal acceleration, the speed, and a throttle opening of the vehicle in a case that the first slope is greater than the first threshold.

3. The method according to claim 1, wherein determining the required torque of the vehicle based on the slope at the vehicle's current position and the speed of the vehicle, comprises:
acquiring a correction coefficient based on the slope at the vehicle's current position;
correcting set data by applying the correction coefficient to obtain corrected set data, wherein the set data is used to describe a correspondence relationship between the speed and the required torque of the vehicle; and
acquiring the required torque of the vehicle from the corrected set data based on the speed of the vehicle,
wherein an uphill condition and a downhill condition of the vehicle correspond to different set data.

4. The method according to claim 1, wherein the method further comprises:
determining charging power required by the vehicle based on the slope at the vehicle's current position and a state of charge (SOC) of the vehicle; and
controlling charging of the vehicle based on the charging power required by the vehicle.

5. The method according to claim 1, wherein determining the required torque of the vehicle based on the slope at the vehicle's current position and the speed of the vehicle, comprises:
determining the required torque of the vehicle based on the slope at the vehicle's current position and the speed of the vehicle in a case that the vehicle is not in a roller dynamometer mode and the slope at the vehicle's current position is greater than a second threshold,
wherein in the roller dynamometer mode, the vehicle only moves hubs while a vehicle body is stationary.

6. The method according to claim 1, wherein the method further comprises:
requesting a motor of the vehicle to provide torque in response to a brake pedal being released in a case that the slope at the vehicle's current position is greater than a third threshold.

7. An apparatus for controlling a vehicle, wherein the apparatus comprises:
a validity verification module, configured to verify validity of a method for determining a slope based on a change in a slope at a vehicle's position determined within a first duration ;
a slope determination module, configured to determine a slope at a vehicle's current position based on longitudinal acceleration of the vehicle in a case that the validity verification succeeds; and
a gear control module, configured to determine required torque of the vehicle based on the slope at the vehicle's current position and a speed of the vehicle, wherein
the gear control module is further configured to control a gear of the vehicle based on the required torque of the vehicle.

8. An electronic device, wherein the electronic device comprises a processor and a memory storing computer programs, and the computer programs, when loaded and run by the processor, cause the processor to perform the method as defined in any one of claims 1 to 6.

9. A computer-readable storage medium, wherein the computer-readable storage medium stores computer programs, and the computer programs, when loaded and run by a processor, cause the processor to perform the method as defined in any one of claims 1 to 6.

10. A computer program product, wherein the computer program product comprises computer programs stored in a computer-readable storage medium, and the computer programs, when read from the computer-readable storage medium, and loaded and run by a processor, cause the processor to perform the method as defined in any one of claims 1 to 6.
